# EUROPÄISCHE PATENTANMELDUNG

(11) **EP 1 519 603 A1**
(43) Veröffentlichungstag der Anmeldung: **30.03.2005**
(21) Anmeldenummer: 03021582.6
(22) Anmeldetag: 24.09.2003
(51) Int. Cl.: H04Q 7/38, H04L 12/28

(54) **Verfahren zur Authentisierung eines Teilnehmers für einen über ein Kommunikationssystem angebotenen Dienst**

(71) Anmelder: SIEMENS AKTIENGESELLSCHAFT, 80333 München (DE)
(72) Erfinder: Morper, Hans-Jochen, 85253 Erdweg (DE)

(57) **Zusammenfassung**

Die Erfindung betrifft ein Verfahren zur Authentisierung eines Teilnehmers zur Benutzung eines über ein erstes Kommunikationssystem angebotenen Dienstes, wobei der Teilnehmer über eine teilnehmerseitige Station (LAPTOP) mit dem ersten Kommunikationssystem kommuniziert, wobei der Teilnehmer durch eine dem Teilnehmer eindeutig zuordenbare, die Authentisierung des Teilnehmers ermöglichende Authentisierungs-Einheit (SIM) in einem zweites Kommunikationssystem authentisierbar ist, wobei Informationen über die Authentisierungs-Einheit (SIM) in einer Diensteinrichtung (SRV) des ersten Kommunikationssystems zur Verfügung stehen, wobei das zweite Kommunikationssystem auf eine Anfrage (REQ_DATA1) der Diensteinrichtung (SRV) unter Bezugnahme auf die Informationen über die Authentisierungs-Einheit (SIM) die Authentisierung des Teilnehmers ermöglichende Daten an die Diensteinrichtung (SRV) übermittelt, wobei die Diensteinrichtung (SRV) zumindest einen Teil der die Authentisierung des Teilnehmers ermöglichenden Daten an die Authentisierungs-Einheit (SIM) sendet, wobei teilnehmerseitig eine Authentisierungs-Einheits -spezifische Antwort auf die empfangenen die Authentisierung des Teilnehmers ermöglichenden Daten ermittelt und an das erste Kommunikationssystem übermittelt wird, wobei in dem ersten Kommunikationssystem oder in dem zweiten Kommunikationssystem eine Überprüfung (TEST) der Korrektheit der Authentisierungs-Einheits - spezifischen Antwort stattfindet, und wobei abhängig von dem Ergebnis der Überprüfung eine dem Dienst entsprechende Kommunikation zwischen der teilnehmerseitigen Station (LAPTOP) und dem ersten Kommunikationssystem stattfindet.

## Beschreibung

Die Erfindung betrifft ein Verfahren zur Authentisierung eines Teilnehmers zur Benutzung eines über ein Kommunikationssystem angebotenen Dienstes. Weiterhin betrifft die Erfindung eine Diensteinrichtung in einem Kommunikationssystem und ein Computerprogrammprodukt, welches für die Diensteinrichtung geeignet ist.

Zur Kommunikation bzw. zur Übertragung von Daten ist eine Vielzahl verschiedenartiger Kommunikationssysteme bekannt. Z.B. existieren Mobilfunkkommunikationssysteme, beispielsweise gemäß dem Standard GSM (Global System for Mobile Telecommunications) oder dem Standard UMTS (Universal Mobile Telecommunications System), bei denen Mobilstationen beim Einbuchen in das entsprechende Netz authentisiert und autorisiert werden. Vorteilhaft an derartigen Systemen ist, dass durch die Authentisierung auch eine Vergebührung von beanspruchten Diensten möglich ist. Weiterhin bieten diese in der Regel zellularen Netze die Möglichkeit einer hohen Mobilität, da sich ein Teilnehmer mit seiner Mobilstation von Netzzelle zu Netzzelle bewegen kann. Nachteilhaft ist bei derartigen zellularen Mobilfunkkommunikationssystemen, dass der Verwaltungsaufwand sehr hoch ist. Außerdem stellen diese Systeme den Funkschnittstellen zur teilnehmerseitigen Mobilstation nur relativ niedrige Datenraten zur Verfügung.

In Mobilfunkkommunikationssystemen werden Informationen (beispielsweise Sprache, Bildinformation, Videoinformation, Kurznachrichten (SMS, Short Message Service) oder andere Daten) mit Hilfe von elektromagnetischen Wellen über eine Funkschnittstelle zwischen sendender und empfangender Station übertragen. Das Abstrahlen der elektromagnetischen Wellen erfolgt dabei mit Trägerfrequenzen, die in dem für das jeweilige System vorgesehenen Frequenzband liegen. Ein zellulares Mobilfunkkommunikationssystem umfasst hierbei teilnehmerseitige Stationen, z.B. Mobilstationen, und Basisstationen, z.B. Node B's, Einrichtungen zur Funkzugangskontrolle und zur Kontrolle der Basisstationen, sowie weitere netzseitige Einrichtungen.

Weiterhin existieren Netze, die als lokale Netze (LAN, Local Area Network) bzw. lokale Funknetze (WLAN: Wireless Local A-rea Network) ausgestaltet sind. Derartige Netze bieten für Teilnehmereinrichtungen einen verwaltungstechnisch sehr einfachen Zugang. Ein weiterer Vorteil besteht in der im Vergleich zu Mobilfunknetzen erheblich höheren Datenrate auf den Schnittstellen zur teilnehmerseitigen Station. Nachteilhaft bei derartigen lokalen Netzen ist jedoch die fehlende Authentisierungsmöglichkeit innerhalb des Netzes und somit auch eine fehlende Vergebührungsmöglichkeit.

Ein weiteres Beispiel für ein Kommunikationssystem ist das Internet. Teilnehmer verwenden für ihren Internetzugang oftmals einen PC, zunehmend aber auch portable Geräte wie Notebooks oder PDAs (Personal Digital Assistant). Beabsichtigt ein Teilnehmer einen über das Internet angebotenen kostenpflichtigen Dienst in Anspruch zu nehmen, werden Waren per Internet verkauft, oder sollen vertrauliche Informationen übermittelt werden, so will der Diensteanbieter in der Regel eine Authentisierung durchführen und die Berechtigung des Teilnehmers sicherstellen. Betreffend für den jeweiligen Dienst subskribierte Teilnehmer kann dies nach üblichen, unsicheren Verfahren wie Username in Verbindung mit Passwort erfolgen. Für adhoc-Zugänge wird in der Regel eine Authentisierung per Kreditkartennummer durchgeführt, was jedoch seitens der Teilnehmer oftmals abgelehnt wird, so dass eine Nutzung des jeweiligen Dienstes unterbleibt.

Der Erfindung liegt die Aufgabe zugrunde, ein effizientes und hinreichende Sicherheit bietendes Verfahren zur Authentisierung eines Teilnehmers zur Benutzung eines über ein Kommunikationssystem angebotenen Dienstes aufzuzeigen. Weiterhin soll eine Einrichtung in dem Kommunikationssystem zur Durchführung des Verfahrens und ein die Durchführung des Verfahrens unterstützendes Computerprogrammprodukt aufgezeigt werden.

Diese Aufgabe wird hinsichtlich des Verfahrens durch ein Verfahren mit den Merkmalen des Anspruchs 1 gelöst.

Vorteilhafte Ausgestaltungen und Weiterbildungen sind Gegenstand von Unteransprüchen.

In dem erfindungsgemäßen Verfahren zur Authentisierung eines Teilnehmers zur Benutzung eines über ein erstes Kommunikationssystem angebotenen Dienstes kommuniziert der Teilnehmer über eine teilnehmerseitige Station mit dem ersten Kommunikationssystem. Der Teilnehmer ist durch eine dem Teilnehmer eindeutig zuordenbare, die Authentisierung des Teilnehmers ermöglichende Authentisierungs-Einheit in einem zweiten Kommunikationssystem authentisierbar. Informationen über die Authentisierungs-Einheit stehen in einer Diensteinrichtung des ersten Kommunikationssystem zur Verfügung. Das zweite Kommunikationssystem übermittelt auf eine Anfrage der Diensteinrichtung unter Bezugnahme auf die Informationen über die Authentisierungs-Einheit die Authentisierung des Teilnehmers ermöglichende Daten an die Diensteinrichtung. Die Diensteinrichtung sendet zumindest einen Teil der die Authentisierung des Teilnehmers ermöglichenden Daten an die Authentisierungs-Einheit. Teilnehmerseitig wird eine Authentisierungs-Einheits -spezifische Antwort auf die empfangenen die Authentisierung des Teilnehmers ermöglichenden Daten ermittelt und an das erste Kommunikationssystem übermittelt. In dem ersten Kommunikationssystem oder in dem zweiten Kommunikationssystem findet eine Überprüfung der Korrektheit der Authentisierungs-Einheits -spezifischen Antwort statt. Abhängig von dem Ergebnis der Überprüfung findet eine dem Dienst entsprechende Kommunikation zwischen der teilnehmerseitigen Station und dem ersten Kommunikationssystem statt.

Die Kommunikation der teilnehmerseitigen Station mit dem ersten Kommunikationssystem, über das der betrachtete Dienst angeboten wird, kann auch über ein oder mehrere andere Kommunikationssysteme stattfinden. Beispielsweise kann die teilnehmerseitige Station über ein WLAN oder auch ein WMAN (Wireless Metropolitan Area Network) Dienste, welche über das Internet angeboten werden, in Anspruch nehmen.

Bei dem ersten Kommunikationssystem, über das der Dienst angeboten wird, kann es sich um ein Mobilfunkkommunikationssystem handeln. Dieses kann sich in dem Fall, dass es sich bei dem zweiten Kommunikationssystem, innerhalb dessen der Teilnehmer durch die Authentisierungs-Einheit authentisierbar ist, auch um ein Mobilfunkkommunikationssystem handelt, von diesem insbesondere durch die Funkzugangstechnologie (RAT, Radio Access Technology) oder den Betreiber unterscheiden. Auch die Verwendung der gleichen Funkzugangstechnologie für das erste und das zweite Kommunikationssystem ist möglich. Unabhängig von der konkreten Ausgestaltung der beiden Kommunikationssysteme ist der Teilnehmer innerhalb des ersten Kommunikationssystems nicht durch die gleiche Authentisierungs-Einheit authentisierbar wie innerhalb des zweiten Kommunikationssystems.

Das erste Kommunikationssystem und das zweite Kommunikationssystem sind hinsichtlich der Authentisierung voneinander getrennt, d. h. sie weisen keine zur Authentisierung genutzten gemeinsamen Einrichtungen auf. Dem ersten Kommunikationssystem ist es daher insbesondere nicht möglich, auf Einrichtungen und Speicher wie etwa das HLR (Home Location Register) des zweiten Kommunikationssystems zuzugreifen. Bei einem Roaming zwischen zwei Mobilfunkkommunikationssystemen hingegen greifen die beiden Systeme auf das gleiche HLR zu, welches in dieser Hinsicht den beiden Systemen gemeinsam ist. Es ist ferner möglich, dass das erste Kommunikationssystem und das zweite Kommunikationssystem grundsätzlich voneinander getrennt sind, d.h. zwar gegebenenfalls eine geeignete Verbindung zwischeneinander, aber keine gemeinsamen Einrichtungen aufweisen.

Die dem Teilnehmer eindeutig zuordenbare, die Authentisierung des Teilnehmers ermöglichende Authentisierungs-Einheit kann z. B. als Hardware-Einheit vorliegen, z.B. als SIM-Karte (SIM: Subscriber Identity Module), als USIM-Karte (USIM: UMTS SIM) oder als SMART-Karte. Weiterhin ist es möglich, dass die Authentisierungs-Einheit als Software-Einheit vorliegt. Die Authentisierungs-Einheit ist dadurch charakterisiert, dass sie dem Teilnehmer eindeutig zuordenbar ist und über einen Mechanismus zur Authentisierung des Teilnehmers verfügt. Eine SIM-Karte z.B. ist eindeutig durch die IMSI (International Mobile Subscriber Identity) charakterisiert. Besitzt ein Teilnehmer nur eine SIM-Karte und wurde ihm nur eine Rufnummer zugewiesen, so ist die SIM-Karte auch über die MSISDN (Mobile Station ISDN Number) eindeutig identifizierbar.

Bei dem Dienst, welcher über das erste Kommunikationssystem angeboten wird, d.h. im Rahmen dessen eine Kommunikation zwischen einem den Dienst nutzenden Teilnehmer und dem ersten Kommunikationssystem stattfindet, kann es sich z.B. um verschiedenartig ausgestaltete Applikationen handeln. Der Dienst kann von dem Betreiber des ersten Kommunikationssystems oder auch von Dritten angeboten werden. Bei der im Rahmen der Authentisierung eingesetzten Diensteinrichtung handelt es sich in der Regel um eine Einrichtung des Anbieters des Dienstes. Sie ist insofern Bestandteil des ersten Kommunikationssystems, als sie mit diesem verbunden ist und über dieses mit anderen Einrichtungen und teilnehmerseitigen Stationen kommunizieren kann.

In der Diensteinrichtung des ersten Kommunikationssystems stehen Informationen über die Authentisierungs-Einheit zur Verfügung. Dieses Zur-Verfügung-Stehen kann durch eine permanente oder zeitweilige Speicherung der Informationen in der Diensteinrichtung realisiert sein. Die Informationen können dadurch zur Verfügung stehen, dass sie von dem Teilnehmer abgefragt oder von einer anderen Einrichtung des ersten Kommunikationssystems heruntergeladen werden. Sie können auch nur zeitweise in der Diensteinrichtung zur Verfügung stehen.

Nach erfolgreicher Authentisierung des Teilnehmers wird der Teilnehmer für den betrachteten Dienst zugelassen, d. h. die dem Dienst entsprechende Kommunikation zwischen der teilnehmerseitigen Station und dem ersten Kommunikationssystem, über welches der Dienst angeboten wird, kann stattfinden.

In Weiterbildung der Erfindung ist die Authentisierungs-Einheit verbunden mit einem Kommunikationsendgerät. Dieses Kommunikationsendgerät ist mit der teilnehmerseitigen Station über eine Schnittstelle verbunden, welche über Funk oder leitungsgebunden realisiert sein kann. Die Verbindung einer Hardware-Authentisierungs-Einheit mit dem Kommunikationsendgerät kann z.B. durch Einstecken der Hardware-Authentisierungs-Einheit in das Kommunikationsendgerät erfolgen, oder auch über eine Funkschnittstelle. Auch eine für den Teilnehmer unlösbare Verbindung zwischen Hardware-Authentisierungs-Einheit und Kommunikationsendgerät ist möglich. Die Verbindung einer Software-Authentisierungs-Einheit mit einem Kommunikationsendgerät kann z.B. durch Speicherung eines Programmes auf dem Kommunikationsendgerät oder durch Verbindung des Kommunikationsendgerätes mit einem geeigneten Speichermedium für das Programm erfolgen.

Vorteilhaft ist es, wenn die Art der die Authentisierung des Teilnehmers ermöglichenden Daten der Art der zur Authentisierung des Teilnehmers im zweiten Kommunikationssystem verwendeten Daten entspricht. Dies bedeutet, dass ein von dem zweiten Kommunikationssystem an das erste Kommunikationssystem zur Authentisierung des Teilnehmers gesendeter Datensatz derart ausgestaltet ist, dass er in dem zweiten Kommunikationssystem zur Authentisierung des Teilnehmers verwendet werden kann. Insbesondere handelt es sich zumindest bei einem Teil der die Authentisierung des Teilnehmers ermöglichenden Daten um ausschließlich von der Authentisierungs-Einheit des Teilnehmers durch die Authentisierungs-Einheits -spezifische Antwort verifizierbare Daten.

In Weiterbildung der Erfindung handelt es sich bei den Informationen über die Authentisierungs-Einheit um eine der Authentisierungs-Einheit zugeordnete Rufnummer des zweiten Kommunikationssystems.

Mit Vorteil sendet vor dem Zur-Verfügung-Stehen der Informationen über die Authentisierungs-Einheit in der Diensteinrichtung des ersten Kommunikationssystems die Diensteinrichtung eine Nachricht zur Anforderung der Informationen an die teilnehmerseitige Station. Auf diese Nachricht antwortet dann die teilnehmerseitige Station mit der Übermittlung der angeforderten Informationen.

Die oben genannte Aufgabe hinsichtlich der Einrichtung in einem Kommunikationssystem wird durch eine Diensteinrichtung mit den Merkmalen des Anspruchs 6 gelöst. Vorteilhafte Weiterbildungen der Erfindung sind Gegenstand von Unteransprüchen.

Die erfindungsgemäße Diensteinrichtung in einem ersten Kommunikationssystem weist Mittel zum Versenden einer Nachricht an eine teilnehmerseitige Station eines Teilnehmers zur Anforderung von Informationen über eine dem Teilnehmer eindeutig zuordenbare, die Authentisierung des Teilnehmers ermöglichende Authentisierungs-Einheit auf. Weiterhin umfasst die Diensteinrichtung Mittel zum Empfangen von Informationen über die Authentisierungs-Einheit von der teilnehmerseitigen Station, sowie Mittel zum Versenden einer Nachricht an ein zweites Kommunikationssystem, in welchem die Authentisierungs-Einheit zur Authentisierung verwendbar ist, zur Anforderung von die Authentisierung des Teilnehmers ermöglichenden Daten unter Bezugnahme auf die Informationen über die Authentisierungs-Einheit. Weitere Bestandteile der Diensteinrichtung sind Mittel zum Empfangen der die Authentisierung des Teilnehmers ermöglichenden Daten von dem zweiten Kommunikationssystem, sowie Mittel zum Versenden einer Nachricht mit zumindest einem Teil der die Authentisierung des Teilnehmers ermöglichenden Daten an die teilnehmerseitige Station, sowie Mittel zum Empfangen einer Authentisierungs-Einheits - spezifischen Antwort auf die durch die teilnehmerseitige Station empfangenen die Authentisierung des Teilnehmers ermöglichenden Daten von der teilnehmerseitigen Station, und schließlich Mittel zum Zulassen der teilnehmerseitigen Station zu einem über das erste Kommunikationssystem angebotenen Dienst in Abhängigkeit von dem Ergebnis einer Überprüfung der Korrektheit der Antwort.

Vorteilhafterweise umfasst die Diensteinrichtung weiterhin Mittel zum Überprüfen der Korrektheit der Authentisierungs-Einheits -spezifischen Antwort. Schließlich kann die Diensteinrichtung Mittel zum Speichern von zumindest einem Teil der die Authentisierung des Teilnehmers ermöglichenden Daten aufweisen.

Die erfindungsgemäße Diensteinrichtung eignet sich insbesondere zur Durchführung des erfindungsgemäßen Verfahrens. Hierfür kann sie weitere geeignete Mittel aufweisen.

Die oben genannte Aufgabe hinsichtlich des Computerprogrammproduktes wird durch ein Computerprogrammprodukt mit den Merkmalen des Anspruchs 9 gelöst.

Eine vorteilhafte Ausgestaltung ist Gegenstand eines Unteranspruchs.

Das Computerprogrammprodukt für ein erstes Kommunikationssystem umfasst folgende Programmschritte:
a) Erstellen einer Nachricht an eine teilnehmerseitige Station eines Teilnehmers zur Anforderung von Informationen über eine dem Teilnehmer eindeutig zuordenbare die Authentisierung des Teilnehmers ermöglichende Authentisierungs-Einheit,
b) Verarbeiten von von der teilnehmerseitigen Station empfangenen Informationen über die Authentisierungs-Einheit,
c) Erstellen einer Nachricht an ein zweites Kommunikationssystem, in welchem die Authentisierungs-Einheit zur Authentisierung verwendbar ist, zur Anforderung von die Authentisierung des Teilnehmers ermöglichenden Daten unter Bezugnahme auf die Informationen über die Authentisierungs-Einheit,
d) Verarbeiten von den von dem zweiten Kommunikationssystem empfangenen die Authentisierung des Teilnehmers ermöglichenden Daten,
e) Erstellen einer Nachricht mit zumindest einem Teil der die Authentisierung des Teilnehmers ermöglichenden Daten an die teilnehmerseitige Station,
f) Verarbeiten von einer von der teilnehmerseitigen Station empfangenen Authentisierungs-Einheits -spezifischen Antwort auf die durch die teilnehmerseitige Station empfangenen die Authentisierung des Teilnehmers ermöglichenden Daten,
g) Zulassen der teilnehmerseitigen Station zu einem über das erste Kommunikationssystem angebotenen Dienst in Abhängigkeit von dem Ergebnis einer Überprüfung der Korrektheit der Antwort.

In Weiterbildung der Erfindung kann ein weiterer Programmschritt der Überprüfung der Korrektheit der Antwort vorgesehen sein.

Es ist jeweils möglich, dass diejenigen Programmschritte, welche der Erstellung von Nachrichten dienen, auch die Versendung der erstellten Nachrichten steuern. Weiterhin ist es jeweils möglich, dass diejenigen Programmschritte, welche der Verarbeitung von empfangenen Nachrichten dienen, den Empfang dieser Nachrichten steuern.

Die beschriebenen Programmschritte können in der erfindungsgemäßen Diensteinrichtung gespeichert sein und dort ablaufen. Weiterhin ist es möglich, dass einzelne oder alle Teile des Computerprogrammproduktes von der erfindungsgemäßen Diensteinrichtung von einem oder mehreren Servern geladen werden, um dann in der Diensteinrichtung abzulaufen. Zur Unterstützung des erfindungsgemäßen Verfahrens kann das erfindungsgemäße Computerprogrammprodukt weitere geeignete Programmschritte aufweisen.

Im folgenden wird die Erfindung anhand eines Ausführungsbeispiels näher erläutert.

Dabei zeigen
- Figur 1:: schematisch das Internet und ein Mobilfunkkommunikationssystem,
- Figur 2:: ein Ablaufdiagramm des erfindungsgemäßen Verfahrens,
- Figur 3:: eine erfindungsgemäße Diensteinrichtung für ein Kommunikationssystem.

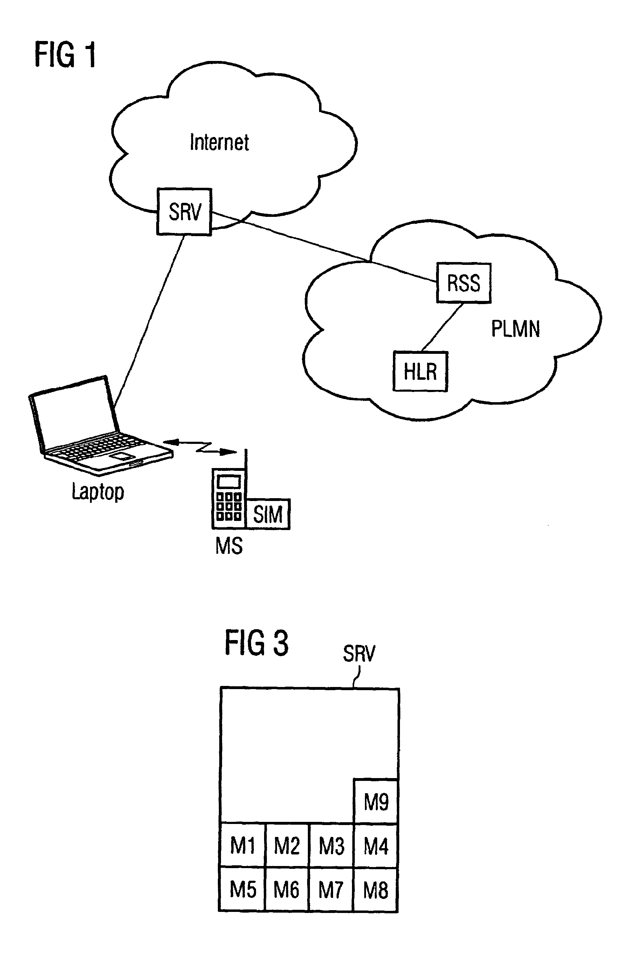

Figur 1 zeigt als Beispiel für ein Kommunikationssystem das Internet INTERNET, zu welchem ein Teilnehmer mittels seines Computers LAPTOP Zugang erhält. Dieser Zugang kann z.B. über LAN, WLAN, GPRS (General Packet Radio Service) oder Modemeinwahl zustande kommen. Der Teilnehmer verwendet hierzu einen Browser , welcher in der Lage ist, eine http-Verbindung (http: Hypertext Transfer Protocol) oder auch eine gesicherte http-s-Verbindung zum einem Server SRV eines Diensteanbieters aufzubauen, welcher einen Dienst über das Internet INTERNET zur Verfügung stellt.

Beabsichtigt der Teilnehmer einen gebührenpflichtigen Dienst des Diensteanbieters, wie z.B. einen Börsendienst, in Anspruch zu nehmen, oder auch im Rahmen eines entsprechenden Dienstes im Internet Waren einzukaufen, so ist eine Authentisierung des Teilnehmers vor oder im Laufe der Inanspruchnahme des Dienstes erforderlich. Diese Authentisierung dient u.a. zur Absicherung des Diensteanbieters oder Verkäufers für die Vergebührung.

Im Beispiel der Figur 1 wird angenommen, dass der Teilnehmer ein Mobiltelefon MS bei sich hat, welches mit einer SIM-Karte SIM ausgestattet ist. Die SIM-Karte SIM, welche z.B. die IMSI und die MSISDN enthält, ermöglicht die Authentisierung des Teilnehmers im Mobilfunkkommunikationssystem PLMN. Dieses Mobilfunkkommunikationssystem PLMN kann z.B. nach dem Standard GSM oder UMTS ausgestaltet sein, es umfasst einen AAA-Server RSS (AAA: Authentification, Authorization and Accounting) zur Bereitstellung von Diensten zur Authentisierung von Teilnehmern, zur Prüfung der Zugangsberechtigung bzw. Autorisierung dieser Teilnehmer für bestimmte Dienste und/oder Ressourcen, sowie zur Protokollierung der Aktivitäten dieser Teilnehmer. Weiterhin ist die Einrichtung HLR (HLR: Home Location Register), welche eine Datenbank, in der die permanenten Daten der Teilnehmer des Mobilfunkkommunikationssystems PLMN verwaltet werden, in dem Mobilfunkkommunikationssystem PLMN vorhanden. Der AAA-Server RSS ist derart ausgestaltet, dass er Daten, welche eine Authentisierung des Teilnehmers ermöglichen, von der Einrichtung HLR abfragen und diese weiterleiten kann.

Während die SIM-Karte zwar im Mobilfunkkommunikationssystem PLMN zur Authentisierung verwendet werden kann, ist eine direkte Authentisierung des Teilnehmers innerhalb des Internet INTERNET nicht möglich.

Das Mobiltelefon MS verfügt über eine geeignete Schnittstelle zur Kommunikation mit dem Computer LAPTOP des Teilnehmers. Dies kann schnurlos, z.B. über Infrarot oder Bluetooth, oder über Kabel, wie seriell oder per USB (Universal Serial Bus), erfolgen. Auch eine direkte Anbindung des Mobiltelefons MS über einen Kartenleser an den Computer LAPTOP ist möglich.

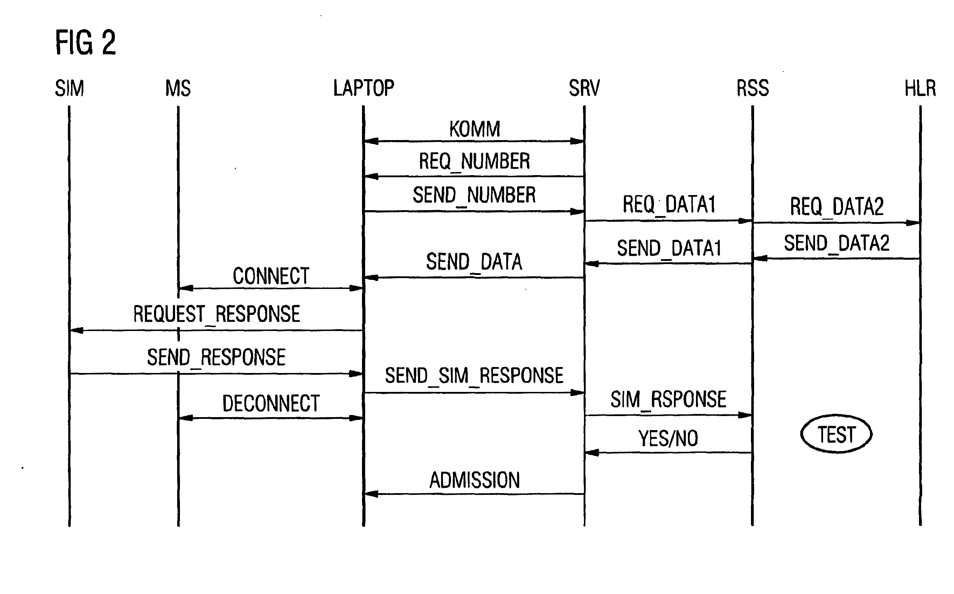

Ein Ablaufdiagramm des erfindungsgemäßen Verfahrens ist in Figur 2 dargestellt, wobei Kommunikationen zwischen der SIM-Karte SIM, dem Mobiltelefon MS, dem Computer LAPTOP, dem Internetserver SRV, dem AAA-Server RSS und der Einrichtung HLR stattfinden. Die Erfindung ermöglicht es aufgrund eines geeigneten Zusammenspiels zwischen dem Mobilfunkkommunikationssystem bzw. dessen Betreiber, dem Diensteanbieter bzw. Service Provider eines Internetdienstes, sowie dem Teilnehmer bzw. seinem Computer und seinem Mobiltelefon für einen Teilnehmer, sicher und zuverlässig den Internetdienst zu nutzen, bzw. für den Diensteanbieter, den Dienst auf entsprechend sichere und zuverlässige Weise anzubieten.

Zu Beginn des Ablaufdiagramms der Figur 2 findet eine Kommunikation zwischen dem Computer LAPTOP des Teilnehmers und dem Internet statt. Im Rahmen dieser Kommunikation wird eine Verbindung KOMM zwischen dem Computer LAPTOP und dem Server SRV des Diensteanbieters eines von dem Teilnehmer angeforderten Dienstes hergestellt. Die Kommunikation zwischen dem Computer LAPTOP und dem Server SRV erfolgt in der Regel über mehrere die jeweiligen Nachrichten weiterleitende Einrichtungen. Mittels einer Nachricht REQ_NUMBER wird der Teilnehmer von dem Server SRV aufgefordert, seine Zugangsdaten einzugeben. Dies kann z.B. über eine Nachfrage nach der Mobilrufnummer auf einer Portalseite des Internet erfolgen. Mit der Nachricht SEND_NUMBER wird die Mobilrufnummer, welche der Teilnehmer in den Computer LAPTOP eingetippt hat, von dem Computer LAPTOP an den Server SRV übermittelt.

Die Mobilrufnummer des Teilnehmers, welche zur Identifizierung der SIM-Karte SIM verwendet werden kann, wird z.B. über eine Radius/Diameter (Radius: Remote Authentication Dial In User Service) Verbindung von dem Server SRV an den AAA-Server RSS des Mobilfunkkommunikationssystems übermittelt. Unter Verwendung der Nachricht REQ_DATA1 erfolgt eine Nachfrage nach Daten, welche eine Authentisierung des Teilnehmers ermöglichen. Der AAA-Server RSS sendet daraufhin mit der Nachricht REQ_DATA2 z.B. über CCS7/MAP (CCS7: Common Channel Signalling No. 7, MAP: Mobile Application Protocol) eine entsprechende Anfrage nach Authentisierungsdaten an die Einrichtung HLR.

Die Authentisierung eines Teilnehmers mittels seiner SIM-Karte erfolgt in Mobilfunkkommunikationssystemen üblicherweise unter Verwendung von Zahlentripletts. Ein Triplett besteht dabei aus einer Zufallszahl, einer Antwort (Response) auf die Zufallszahl und einem Schlüssel. Der Schlüssel wird zur Verschlüsselung der späteren Datenübertragung nach erfolgreicher Authentisierung verwendet. Einer SIM-Karte werden im Rahmen der Authentisierung die Zufallszahl und der Schlüssel zugesandt, woraufhin die SIM-Karte eine Antwort auf die Zufallszahl bestimmt. Die von verschiedenen SIM-Karten zur Berechnung der Antwort verwendeten kartenspezifischen Parameter unterscheiden sich voneinander, so dass die berechnete Antwort SIM-Karten-spezifisch ist. Die zur Berechnung verwendeten kartenspezifischen Parameter sind auch im Mobilfunkkommunikationssystem, in der Regel in der Einrichtung HLR, gespeichert. Die Verifizierung der Antwort als ein Teil des Zahlentripletts kann somit nur durch die korrekte und somit authentisierbare SIM-Karte erfolgen.

Mit der Nachricht SEND_DATA2 erfolgt die Versendung eines üblicherweise innerhalb des Mobilfunkkommunikationssystems PLMN zur Authentisierung verwendeten Zahlentripletts an den AAA-Server RSS, welcher die die Authentisierung ermöglichenden Informationen mit der Nachricht SEND_DATA1 an den Server SRV des Diensteanbieters weiterleitet.

Der Server SRV übermittelt die Zufallszahl und den Schlüssel unter Verwendung der Nachricht SEND_DATA an den Computer LAPTOP. Auch eine Versendung der Zufallszahl ohne den Schlüssel mit der Nachricht SEND_DATA ist möglich. Nach dem Aufbau CONNECT einer Verbindung zwischen dem Computer LAPTOP und dem Mobiltelefon MS, welcher aufgrund des Empfangs der Zufallszahl im Computer LAPTOP angestoßen wurde, erfolgt die Versendung der Zufallszahl von dem Computer LAPTOP an die SIM-Karte SIM unter Verwendung der Nachricht REQUEST_RESPONSE mit der Aufforderung, die entsprechende Antwort zu bestimmen. Nach der Ermittlung der Response, d.h. der SIM-Karten-spezifischen Antwort auf die Zufallszahl, versendet die SIM-Karte über das Mobiltelefon MS die ermittelte Antwort mit der Nachricht SEND_RESPONSE an den Computer LAPTOP. Daraufhin erfolgt der Abbau DECONNECT der Verbindung zwischen dem Computer LAPTOP und dem Mobiltelefon MS. Die Kommunikation zwischen dem Computer LAPTOP und dem Mobiltelefon MS des Teilnehmers erfolgt hierbei ohne notwendige Zwischenschaltung von Handlungen des Teilnehmers.

Die von der SIM-Karte SIM bestimmte Response wird vom Computer LAPTOP mit der Nachricht SEND_SIM_RESPONSE an den Server SRV übermittelt. Dieser leitet die Response dann mit der Nachricht SIM_RESPONSE an den AAA-Server RSS weiter. Die Nachricht SIM_RESPONSE entspricht einer expliziten oder impliziten Aufforderung zur Überprüfung der Korrektheit der Response. Im Mobilfunkkommunikationssystem findet dann eine Überprüfung TEST der Korrektheit der Response statt. In dem Fall, dass das Mobilfunkkommunikationssystem die Überprüfung TEST durchführt, genügt an Stelle der Übermittlung des vollständigen Zahlentripletts von dem Mobilfunkkommunikationssystem an den Server SRV des Diensteanbieters mit der Nachricht SEND_DATA1 die Übermittlung der Zufallszahl oder der Zufallszahl und des Schlüssels.

Wird innerhalb des Mobilfunkkommunikationssystems festgestellt, dass die Response mit der Antwort des Zahlentripletts übereinstimmt, so wird die erfolgreiche Authentisierung mit der Nachricht YES/NO bestätigt. In dem Fall, dass keine Übereinstimmung festgestellt wird, erfolgt mittels der Nachricht YES/NO eine Mitteilung über die fehlgeschlagene Authentisierung. Somit ist dem Server SRV aufgrund der Nachricht YES/NO bekannt, ob er den Teilnehmer zu dem Dienst zulassen kann oder nicht.

Alternativ kann auch der Server SRV eine Überprüfung der Übereinstimmung zwischen der von der SIM-Karte SIM ermittelten Response und der zuvor von der Einrichtung HLR mit der Nachricht SEND_DATA1 als Teil des Zahlentripletts übermittelten Response durchführen.

Ist die von der SIM-Karte SIM ermittelte Response korrekt, so wird der Teilnehmer für den gewünschten Dienst zugelassen bzw. der Dienst verfügbar gemacht, welches durch eine Nachricht ADMISSION von dem Server SRV an den Computer LAPTOP mitgeteilt wird. Im folgenden findet dann die Datenübertragung zwischen dem Server SRV und dem Computer LAPTOP gemäß dem angeforderten Dienst statt, wie z.B. die Übertragung von Aktienkursen im Rahmen eines Börsendienstes. Wird eine Diskrepanz zwischen den beiden Werten für die Response festgestellt, so erfolgt - in Figur 2 nicht dargestellt - eine Ablehnung des Teilnehmers für den jeweiligen Dienst.

Vorteilhaft ist es z.B. im Rahmen eines Abonnement-Dienstes, wenn der Teilnehmer bei der Subskription seine Mobilrufnummer bei dem Diensteanbieter hinterlegt. In diesem Fall kann die Nachfrage des Servers des Diensteanbieters nach der Mobilrufnummer vor jeder Nutzung des Dienstes unterbleiben und der Teilnehmer muss nicht seine Mobilrufnummer in den Computer eintippen. Vielmehr kann von dem Diensteanbieter aufgrund einer Identifikationsinformation des Teilnehmers die Verknüpfung zu der jeweiligen Mobilrufnummer hergestellt werden. Ansonsten kann das Verfahren wie oben beschrieben durchgeführt werden. Ein Zutun des Teilnehmers ist in diesem Fall nicht nötig, vielmehr verläuft die Authentisierung aus Sicht des Teilnehmers vollkommen im Hintergrund ab, so dass er einen seemless service erfährt.

Weiterhin ist es nicht notwendig, dass die SIM-Karte Bestandteil eines Mobiltelefons ist. Vielmehr kann das erfindungsgemäße Verfahren auch bei direkt in ein Notebook eingesteckten SIM-Karten, z.B. über SmartCard oder USB-Dongle, angewandt werden. Jedoch ist es aus administrativen und netztopologischen Gründen oftmals sinnvoll, pro Teilnehmer nur eine einzige SIM-Karte einzusetzen. Dies resultiert daraus, dass pro SIM-Karte im HLR ein Datensatz angelegt wird, wodurch fixe Kosten pro SIM-Karte entstehen. Außerdem wünschen Kunden, welche mehrere SIM-Karten besitzen, in der Regel nicht eine Rechnung pro SIM-Karte, sondern eine gemeinsame Rechnung für ihre SIM-Karten, so dass die Rechnungen vor der Zustellung zum Kunden durch den Betreiber nachbearbeitet werden müssen.

Mit dem erfindungsgemäßen Verfahren können nahezu alle Mobilfunkteilnehmer weltweit für Dienste von Kommunikationssystemen authentisiert werden, da zwischen den meisten Mobilfunkkommunikationssystemen weltweit Roaming-Abkommen bestehen. Hierzu greift das von dem Server kontaktierte Mobilfunkkommunikationssystem dann auf eine geeignete Teilnehmerdatenbank eines anderen Mobilfunkkommunikationssystems zu, mit welchem ein Roaming-Abkommen besteht.

Von Vorteil für den Teilnehmer ist bei dem beschriebenen Verfahren, dass er sich keine Informationen wie z.B. ein Passwort für einen Dienst merken muss. Für Anbieter von Diensten hingegen ist von Vorteil, dass aufgrund des einfachen und sicheren Authentisierungsverfahrens insbesondere ohne Verwendung von Kreditkartennummern eine steigende Anzahl von Nutzern für die jeweiligen Dienste erwartet werden kann.

Bei dem erfindungsgemäßen Verfahren zur Authentisierung eines Teilnehmers für einen Dienst, welcher über ein Kommunikationssystem angeboten wird, muss keine Authentisierung des Teilnehmers für eine Verbindung oder Kommunikation mit dem Kommunikationssystem im allgemeinen erfolgen. Vielmehr kann der Teilnehmer bereits mit dem Kommunikationssystem kommunizieren oder innerhalb des Kommunikationssystems authentisiert sein, bevor das erfindungsgemäße Verfahren zur Authentisierung des Teilnehmers für den Dienst durchgeführt wird. Die Authentisierung im Rahmen der Erfindung erfolgt ausschließlich in Bezug auf einen von dem Teilnehmer angeforderten Dienst, weshalb die netzseitigen Verfahrensschritte von einem Server des jeweiligen Diensteanbieters durchgeführt werden.

Figur 3 zeigt einen solchen erfindungsgemäßen Server SRV. Dieser weist Mittel M1 zum Versenden einer Aufforderung an eine teilnehmerseitige Station zur Übermittlung von Informationen über eine SIM-Karte auf. Diese Aufforderung kann einmalig, z.B. bei der Subskription der Teilnehmers, oder auch bei jeder Inanspruchnahme des Dienstes erfolgen. Weiterhin weist der Server SRV Mittel M2 zum Empfangen der angeforderten Informationen z.B. in Form der Mobilrufnummer der SIM-Karte auf, und Mittel M3 zum Versenden einer Anforderung an ein Mobilfunkkommunikationssystem zur Anforderung von Authentisierungsdaten unter Bezugnahme auf Informationen über die SIM-Karte. Die Mittel M4 dienen zum Empfangen der angeforderten die Authentisierung des Teilnehmers ermöglichenden Daten, die Mittel M5 der Versendung von zumindest einem Teil der Authentisierungsdaten an die teilnehmerseitige Station, die Mittel M6 zum Empfangen der von der SIM-Karte ermittelten Response, und die Mittel M7 zum Zulassen der teilnehmerseitigen Station zu dem jeweiligen Dienst in Abhängigkeit von der Überprüfung der Response auf Korrektheit. Die Überprüfung kann hierbei sowohl im Server SRV unter Verwendung der Mittel M8 oder auch im Mobilfunkkommunikationssystem erfolgen. Die Zulassung des Teilnehmers zu dem von ihm angeforderten Dienst kann entweder explizit durch eine positive Zulassungsbestätigung erfolgen, oder implizit durch Übermittlung von Informationen, welche Teil des Dienstes sind. Weiterhin kann der erfindungsgemäße Server SRV Mittel M9 zum Speichern von Daten, welche eine Authentisierung des Teilnehmers ermöglichen, aufweisen. Diese Speicherung kann hierbei permanent oder zeitweilig erfolgen.

Während der Server SRV in den Figuren 1 und 3 als baulich zusammenhängende Einrichtung dargestellt ist, kann eine Realisation des erfindungsgemäßen Servers auch durch mehrere baulich getrennte, miteinander über geeignete Schnittstellen verbundene Einrichtungen erfolgen.

## Patentansprüche

1. Verfahren zur Authentisierung eines Teilnehmers zur Benutzung eines über ein erstes Kommunikationssystem (INTERNET) angebotenen Dienstes,
- wobei der Teilnehmer über eine teilnehmerseitige Station (LAPTOP) mit dem ersten Kommunikationssystem (INTERNET) kommuniziert,
- wobei der Teilnehmer durch eine dem Teilnehmer eindeutig zuordenbare, die Authentisierung des Teilnehmers ermöglichende Authentisierungs-Einheit (SIM) in einem zweiten Kommunikationssystem (PLMN) authentisierbar ist,
- wobei Informationen über die Authentisierungs-Einheit (SIM) in einer Diensteinrichtung (SRV) des ersten Kommunikationssystems (INTERNET) zur Verfügung stehen,
- wobei das zweite Kommunikationssystem (PLMN) auf eine Anfrage (REQ_DATA1) der Diensteinrichtung (SRV) unter Bezugnahme auf die Informationen über die Authentisierungs-Einheit (SIM) die Authentisierung des Teilnehmers ermöglichende Daten an die Diensteinrichtung (SRV) übermittelt,
- wobei die Diensteinrichtung (SRV) zumindest einen Teil der die Authentisierung des Teilnehmers ermöglichenden Daten an die Authentisierungs-Einheit (SIM) sendet,
- wobei teilnehmerseitig eine Authentisierungs-Einheits - spezifische Antwort auf die empfangenen die Authentisierung des Teilnehmers ermöglichenden Daten ermittelt und an das erste Kommunikationssystem (INTERNET) übermittelt wird,
- wobei in dem ersten Kommunikationssystem (INTERNET) oder in dem zweiten Kommunikationssystem (PLMN) eine Überprüfung (TEST) der Korrektheit der Authentisierungs-Einheits -spezifischen Antwort stattfindet,
- und wobei abhängig von dem Ergebnis der Überprüfung eine dem Dienst entsprechende Kommunikation zwischen der teilnehmerseitigen Station (LAPTOP) und dem ersten Kommunikationssystem (INTERNET) stattfindet.

2. Verfahren nach Anspruch 1,
**dadurch gekennzeichnet,**
**dass** die Authentisierungs-Einheit (SIM) verbunden ist mit einem Kommunikationsendgerät (MS), welches mit der teilnehmerseitigen Station (LAPTOP) über eine Schnittstelle verbunden ist.

3. Verfahren nach Anspruch 1 oder 2,
**dadurch gekennzeichnet,**
**dass** die Art der die Authentisierung des Teilnehmers ermöglichenden Daten der Art der zur Authentisierung des Teilnehmers im zweiten Kommunikationssystem (PLMN) verwendeten Daten entspricht.

4. Verfahren nach einem der Ansprüche 1 bis 3,
**dadurch gekennzeichnet,**
**dass** es sich bei den Informationen über die Authentisierungs-Einheit (SIM) um eine der Authentisierungs-Einheit (SIM) zugeordnete Rufnummer des zweiten Kommunikationssystems (PLMN) handelt.

5. Verfahren nach einem der Ansprüche 1 bis 4,
**dadurch gekennzeichnet,**
**dass** vor dem Zur-Verfügung-Stehen der Informationen über die Authentisierungs-Einheit (SIM) in der Diensteinrichtung (SRV) des ersten Kommunikationssystems (INTERNET) die Diensteinrichtung (SRV) eine Nachricht (REQ_NUMBER) zur Anforderung der Informationen an die teilnehmerseitige Station (LAPTOP) sendet.

6. Diensteinrichtung (SRV) in einem ersten Kommunikationssystem (INTERNET) mit
- Mitteln (M1) zum Versenden einer Nachricht (REQ_NUMBER) an eine teilnehmerseitige Station (LAPTOP) eines Teilnehmers zur Anforderung von Informationen über eine dem Teilnehmer eindeutig zuordenbare, die Authentisierung des Teilnehmers ermöglichende Authentisierungs-Einheit (SIM),
- Mittel (M2) zum Empfangen von Informationen über die Authentisierungs-Einheit (SIM) von der teilnehmerseitigen Station (LAPTOP),
- Mitteln (M3) zum Versenden einer Nachricht (REQ_DATA1) an ein zweites Kommunikationssystem (PLMN), in welchem die Authentisierungs-Einheit (SIM) zur Authentisierung verwendbar ist, zur Anforderung von die Authentisierung des Teilnehmers ermöglichenden Daten unter Bezugnahme auf die Informationen über die Authentisierungs-Einheit (SIM),
- Mitteln (M4) zum Empfangen der die Authentisierung des Teilnehmers ermöglichenden Daten von dem zweiten Kommunikationssystem (PLMN),
- Mitteln (M5) zum Versenden einer Nachricht (SEND_DATA) mit zumindest einem Teil der die Authentisierung des Teilnehmers ermöglichenden Daten an die teilnehmerseitige Station (LAPTOP),
- Mitteln (M6) zum Empfangen einer Authentisierungs-Einheits -spezifischen Antwort auf die durch die teilnehmerseitige Station (LAPTOP) empfangenen die Authentisierung des Teilnehmers ermöglichenden Daten von der teilnehmerseitigen Station (LAPTOP),
- Mitteln (M7) zum Zulassen der teilnehmerseitigen Station (LAPTOP) zu einem über das erste Kommunikationssystem (INTERNET) angebotenen Dienst in Abhängigkeit von dem Ergebnis einer Überprüfung (TEST) der Korrektheit der Antwort.

7. Diensteinrichtung (SRV) in einem ersten Kommunikationssystem (INTERNET) nach Anspruch 6 mit Mitteln (M8) zum Überprüfen (TEST) der Korrektheit der Authentisierungs-Einheits -spezifischen Antwort.

8. Diensteinrichtung (SRV) in einem ersten Kommunikationssystem (INTERNET) nach Anspruch 6 oder 7 mit Mitteln (M9) zum Speichern von zumindest einem Teil der die Authentisierung des Teilnehmers ermöglichenden Daten.

9. Computerprogrammprodukt für ein erstes Kommunikationssystem (INTERNET) mit folgenden Programmschritten:
- Erstellen einer Nachricht (REQ_NUMBER) an eine teilnehmerseitige Station (LAPTOP) eines Teilnehmers zur Anforderung von Informationen über eine dem Teilnehmer eindeutig zuordenbare, die Authentisierung des Teilnehmers ermöglichende Authentisierungs-Einheit (SIM),
- Verarbeiten von von der teilnehmerseitigen Station (LAPTOP) empfangenen Informationen über die Authentisierungs-Einheit (SIM),
- Erstellen einer Nachricht (REQ_DATA1) an ein zweites Kommunikationssystem (PLMN), in welchem die Authentisierungs-Einheit (SIM) zur Authentisierung verwendbar ist, zur Anforderung von die Authentisierung des Teilnehmers ermöglichenden Daten unter Bezugnahme auf die Informationen über die Authentisierungs-Einheit (SIM),
- Verarbeiten von den von dem zweiten Kommunikationssystem (PLMN) empfangenen die Authentisierung des Teilnehmers ermöglichenden Daten,
- Erstellen einer Nachricht (SEND_DATA) mit zumindest einem Teil der die Authentisierung des Teilnehmers ermöglichenden Daten an die teilnehmerseitige Station (LAPTOP),
- Verarbeiten von einer von der teilnehmerseitigen Station (LAPTOP) empfangenen Authentisierungs-Einheits - spezifischen Antwort auf die durch die teilnehmerseitige Station (LAPTOP) empfangenen die Authentisierung des Teilnehmers ermöglichenden Daten,
- Zulassen der teilnehmerseitigen Station (LAPTOP) zu einem über das erste Kommunikationssystem (INTERNET) angebotenen Dienstes in Abhängigkeit von dem Ergebnis einer Überprüfung der Korrektheit der Antwort.

10. Computerprogrammprodukt nach Anspruch 9 mit einem weiteren Programmschritt:
- Überprüfen der Korrektheit der Antwort.
